# EUROPEAN PATENT APPLICATION

(11) **EP 4 549 829 A1**
(43) Date of publication of application: **07.05.2025**
(21) Application number: 23852222.1
(22) Date of filing: 02.06.2023
(51) Int. Cl.: F24F 7/08, F24F 3/147, F24F 13/22

(54) **VENTILATION DEVICE**

(30) Priority: 12.08.2022 JP 2022128672
(71) Applicant: DAIKIN INDUSTRIES, LTD., Osaka-shi, Osaka 530-0001 (JP)
(72) Inventor: KURITA, Daiki, Osaka-shi, Osaka 530-0001 (JP); HIRANO,Tomomi, Osaka-shi, Osaka 530-0001 (JP); SAKAI, Gakuto, Osaka-shi, Osaka 530-0001 (JP)
(74) Representative: Goddar, Heinz J.
(86) International application number: PCT/JP2023/020587
(87) International publication number: WO 2024/034238

(57) **Abstract**

A ventilator 10 includes a casing 11, an exhaust fan 13, a supply fan 14, a heat exchange element 12 that allows heat exchange between air flowing through an exhaust air passage 16 and air flowing through a supply air passage 17, a rail 40 that guides the heat exchange element 12, a water tray 30 including a first water receiver 31 disposed on one side in a direction perpendicular to the longitudinal direction and an up-down direction of the heat exchange element 12 and a second water receiver 32 disposed on another side in the direction perpendicular to the longitudinal direction and the up-down direction of the heat exchange element 12, a holder 33 that is disposed between the first water receiver 31 and the second water receiver 32 and holds the rail 40, and a passage 35 that allows the first water receiver 31 and the second water receiver 32 to communicate with each other, and a seal material 50 that is disposed in the passage 35 and hinders a flow of air between the first water receiver 31 and the second water receiver 32, in which a water passage 36 through which water flows between the water receivers 31 and 32 is formed between the passage 35 and the seal material 50.

## Description

### TECHNICAL FIELD

The present disclosure relates to a ventilator.

### BACKGROUND ART

Conventionally, there is known a ventilator that supplies outdoor air to an indoor space, exhausts indoor air to an outdoor space, and further exchanges heat between supply air and exhaust air by a heat exchange element (see Patent Literature 1). In the ventilator, dew condensation may occur in the heat exchange element, and the ventilator includes a drain pan for receiving dew condensation water generated in the heat exchange element and discharging the dew condensation water to the outside of the ventilator. The drain pan includes a supply-side drain pan installed on a blow-out side of a supply flow in the heat exchange element, an exhaust-side drain pan installed on a blow-out side of an exhaust flow in the heat exchange element, and a passage that connects a first water receiver and a second water receiver.

### CITATION LIST

### [PATENT LITERATURE]

PATENT LITERATURE 1: PCT International Publication No. 2017/141443

### SUMMARY OF THE INVENTION

### [TECHNICAL PROBLEM]

In the ventilator, air flows between the supply-side drain pan and the exhaust-side drain pan through the passage. In the ventilator, in order to suppress an amount of air flowing through the passage, it is necessary to adjust a pressure difference between a supply air passage and an exhaust air passage, to provide a wall for increasing a pressure loss in the passage, or to provide a trap in the passage.

An object of the present disclosure is to easily suppress an amount of air flowing through a passage between a first water receiver disposed on one side in a direction perpendicular to a longitudinal direction and an up-down direction of a heat exchange element and a second water receiver disposed on another side in the direction perpendicular to the longitudinal direction and the up-down direction of the heat exchange element in a water tray provided below the heat exchange element.

### [SOLUTION TO PROBLEM]

(1) A ventilator of the present disclosure includes a casing having an exhaust air passage and a supply air passage, an exhaust fan that is installed in the exhaust air passage and generates an exhaust flow in the exhaust air passage, an air supply fan that is installed in the supply air passage and generates a supply air flow in the supply air passage, a heat exchange element that allows heat exchange between air flowing through the exhaust air passage and air flowing through the supply air passage, a rail that is disposed below the heat exchange element and guides the heat exchange element when the heat exchange element is taken into and out of the casing along a longitudinal direction, a water tray that is disposed below the heat exchange element and includes a first water receiver disposed on one side in a direction perpendicular to the longitudinal direction and an up-down direction of the heat exchange element, a second water receiver disposed on another side in the direction perpendicular to the longitudinal direction and the up-down direction of the heat exchange element, a holder that is disposed between the first water receiver and the second water receiver and holds the rail, and a passage that is formed in the holder and allows the first water receiver and the second water receiver to communicate with each other, and a seal material that is disposed in the passage and hinders a flow of air between the first water receiver and the second water receiver via the passage, in which a water passage through which water flows between the first water receiver and the second water receiver is formed between a bottom surface or a side surface of the passage and the seal material.
   In the above configuration, the seal material disposed in the passage can suppress the flow of air between the water receivers through the passage. As a result, an amount of air flowing through the passage can be easily suppressed. Furthermore, a structure and a material of the seal material are devised such that the water passage is formed between the bottom surface or the side surface of the passage and the seal material, and thus, the flow of air in the passage can be suppressed, and water can flow between the first water receiver and the second water receiver.
(2) In the ventilator according to a mode of (1) of the present disclosure, preferably, a bottom surface of the first water receiver and a bottom surface of the second water receiver are substantially horizontal, and two or more of the passages are provided in the longitudinal direction of the heat exchange element, the seal material is disposed in each of the passages, and the water passage through which water flows between the first water receiver and the second water receiver is formed between the bottom surface or the side surface of each of the passages and the seal material.
   This configuration can accumulate dew condensation water all over the first water receiver and the second water receiver in the water tray. A plurality of passages provided in such a configuration facilitates forward and backward flows of dew condensation water between the first water receiver and the second water receiver. Therefore, in the ventilator of the present disclosure, the dew condensation water can be spread all over the first water receiver and the second water receiver in the water tray. In this case, the dew condensation water on the water tray is easily evaporated, a height (depth) of the water tray can be suppressed, and a dimension in a height direction of the ventilator can be suppressed.
(3) In the ventilator according to a mode of (1) or (2) of the present disclosure, the water tray preferably extends to a position outside of ends on one side and another side of the heat exchange element in the longitudinal direction of the heat exchange element and in a direction perpendicular to the longitudinal direction and the up-down direction of the heat exchange element.
   In this configuration, by enlarging a water receiving area of the water tray, the height (depth) of the water tray can be suppressed, and the dimension in the height direction of the ventilator can be suppressed. In this case, the water tray can receive the dew condensation water dropping from the heat exchange element without any leakage.
(4) In the ventilator according to any one mode of (1) to (3) of the present disclosure, the water tray preferably extends to a position outside of ends on one side and another side in a longitudinal direction of the rail.
   In this configuration, the dew condensation water dropping from the ends of the rail can be received by the water tray without any leakage.
(5) In the ventilator of any one mode of (1) to (4) of the present disclosure, the passage is preferably provided at an end of the holder in the longitudinal direction of the heat exchange element, and an end of the rail is preferably located on the passage.
   In this configuration, the dew condensation water dropping from the ends of the rail can be received by the passage. In the ventilator having such a configuration, the dew condensation water received in the passage can flow to both sides of the first water receiver and the second water receiver, and an imbalance of the dew condensation water accumulated in the first water receiver and the second water receiver can be suppressed.
(6) In the ventilator according to any one mode of (1) to (5) of the present disclosure, the water tray is preferably further disposed above the heat exchange element as a vertically symmetrical mode.

In this configuration, the ventilator can be turned upside down for use.

### BRIEF DESCRIPTION OF DRAWINGS

FIG. 1 is a schematic explanatory sectional view of a ventilator according to an embodiment of the present disclosure as viewed from above.
FIG. 2 is a schematic explanatory sectional view of the ventilator taken along line A-A indicated in FIG. 1.
FIG. 3 is a schematic explanatory sectional view of the ventilator taken along line B-B indicated in FIG. 1.
FIG. 4 is a schematic perspective view of a heat exchange element.
FIG. 5 is a schematic diagram of a water tray as viewed from above.
FIG. 6 is an enlarged schematic diagram illustrating one end of the water tray in a longitudinal direction.
FIG. 7 is a schematic explanatory sectional view of the water tray taken along line C-C in FIG. 6.
FIG. 8 is a partially enlarged sectional view illustrating an installation state of the heat exchange element and the water tray in the ventilator.
FIG. 9 is a schematic explanatory sectional view illustrating an installation state of a rail and a heat exchange element in a holder of the water tray.
FIG. 10 is an explanatory sectional view illustrating an arrangement situation of a seal material and a formation situation of a water passage according to a first embodiment.
FIG. 11 is an explanatory sectional view illustrating an arrangement situation of a seal material and a formation situation of a water passage according to a second embodiment.

### DETAILED DESCRIPTION

Embodiments of the present disclosure will be described in detail hereinafter with reference to the accompanying drawings.

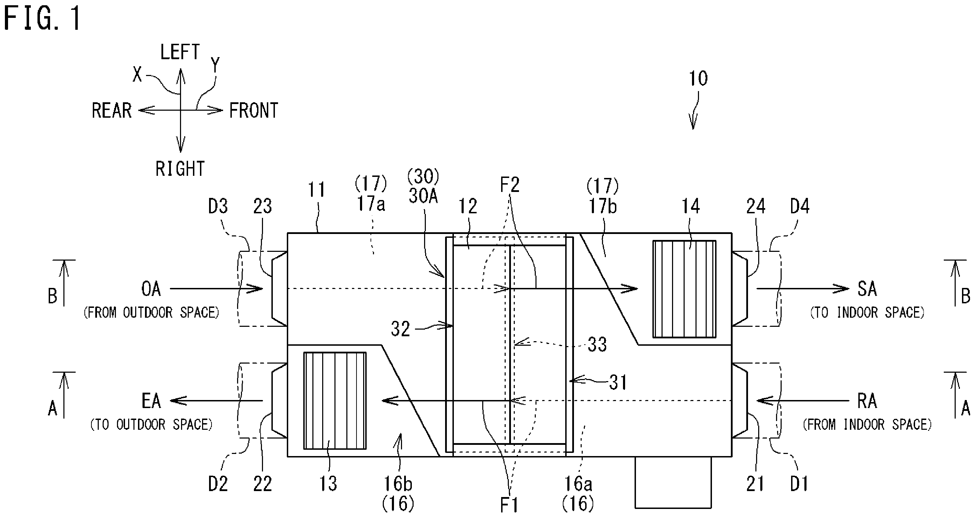

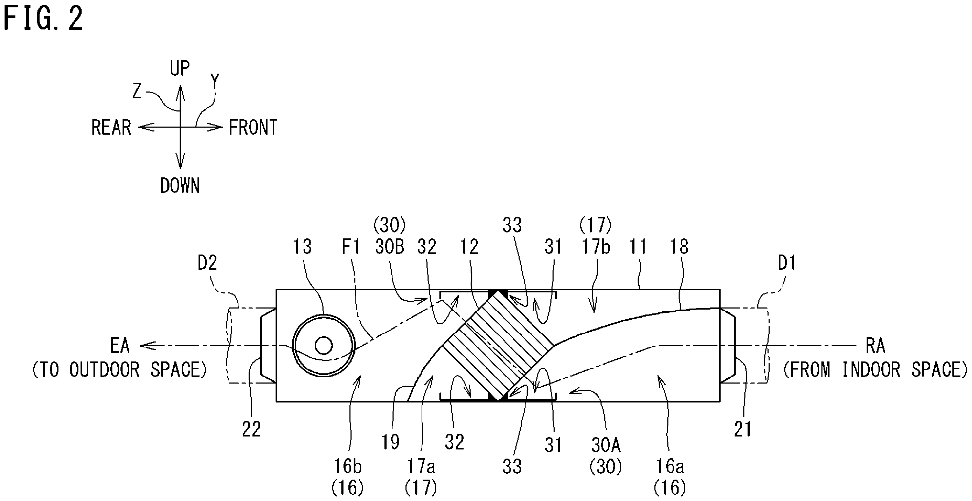

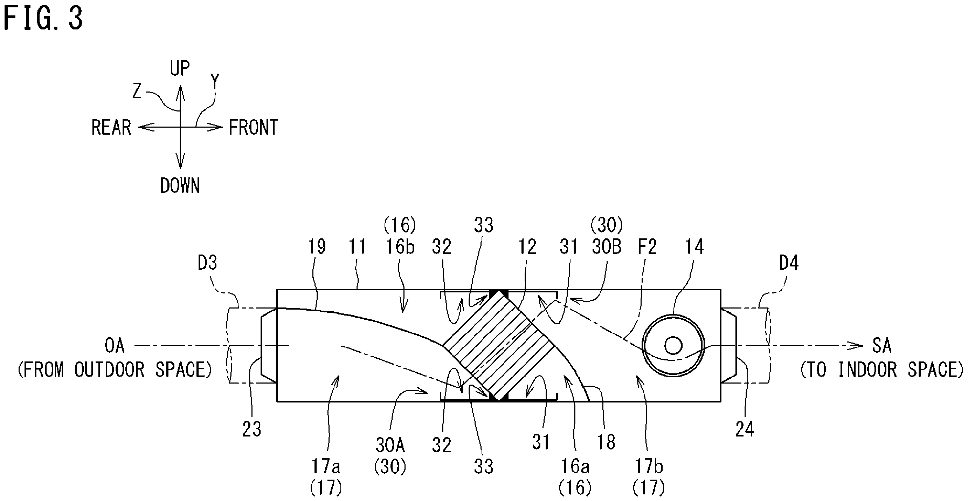

FIG. 1 is a schematic explanatory sectional view of a ventilator according to an embodiment of the present disclosure as viewed from above. FIG. 2 is a schematic explanatory sectional view of the ventilator taken along line A-A indicated in FIG. 1. FIG. 3 is a schematic explanatory sectional view of the ventilator taken along line B-B indicated in FIG. 1. In the following description, the terms "up", "down", "front", "rear", "left", and "right" are indicated by arrows illustrated in FIGS. 1 to 3 in conjunction with these terms. Particularly, a first direction indicated by an arrow X in FIG. 1 is defined as a left-right direction, a second direction indicated by an arrow Y in FIGS. 1 to 3 is defined as a front-rear direction, and a third direction Z indicated by an arrow Z in FIGS. 2 and 3 is defined as an up-down direction. However, these definitions are merely exemplary. For example, the first direction X may be regarded as the front-rear direction and the second direction Y may be regarded as the left-right direction.

### (Overall configuration of ventilator)

A ventilator 10 illustrated in FIG. 1 to 3 ventilates an indoor space by exchanging outdoor air with indoor air. The ventilator 10 is installed in the indoor space. The ventilator 10 is connected to the indoor space via ducts D1 and D4, and is connected to an outdoor space via ducts D2 and D3.

As shown in FIG. 1 to FIG. 3, the ventilator 10 includes a casing 11 having a substantially rectangular parallelepiped box shape. The casing 11 accommodates a heat exchange element 12, an exhaust fan 13, a supply fan 14, and a water tray 30. The casing 11 is provided with a return air intake port 21, an exhaust air blow-out port 22, an outside air intake port 23, and a supply air blow-out port 24.

### (Configurations of supply air passage and exhaust air passage)

As shown in FIGS. 1 to 3, the return air intake port 21 is used to take in air (return air) RA from the indoor space into the casing 11. The exhaust air blow-out port 22 is used to discharge the return air RA taken into the casing 11 to the outdoor space as exhaust air EA. The outside air intake port 23 is used to take air (outside air) OA from the outdoor space into the casing 11. The supply air blow-out port 24 is used to supply the outside air OA taken into the casing 11 to the indoor space as supply air SA.

As shown in FIGS. 1 and 2, the return air intake port 21 is connected the indoor space via the duct D1. The exhaust air blow-out port 22 is connected to the outdoor space via the duct D2. The following description refers to an air flow path connecting the indoor space and the outdoor space via the casing 11 via the ducts D1 and D2, and the air flow path will also be called an exhaust air passage (an exhaust air passage 16 to be described later).

As shown in FIGS. 1 and 3, the outside air intake port 23 is connected to the outdoor space via the duct D3. The supply air blow-out port 24 is connected to the indoor space via the duct D4. The following description refers to an air flow path connecting the indoor space and the outdoor space via the casing 11 via the ducts D3 and D4, and the air flow path will also be called a supply air passage (a supply air passage 17 to be described later).

As shown in FIGS. 1 to 3, in the casing 11, the return air RA taken in through the return air intake port 21 passes the heat exchange element 12 and is discharged to the outdoor space through the exhaust air blow-out port 22 as the exhaust air EA. Such an air flow will also be referred to as a "first air flow F1". The outside air OA taken in through the outside air intake port 23 passes the heat exchange element 12 and is supplied to the indoor space through the supply air blow-out port 24 as the supply air SA. Such an air flow will also be referred to as a "second air flow F2".

### (Configuration of heat exchange element 12)

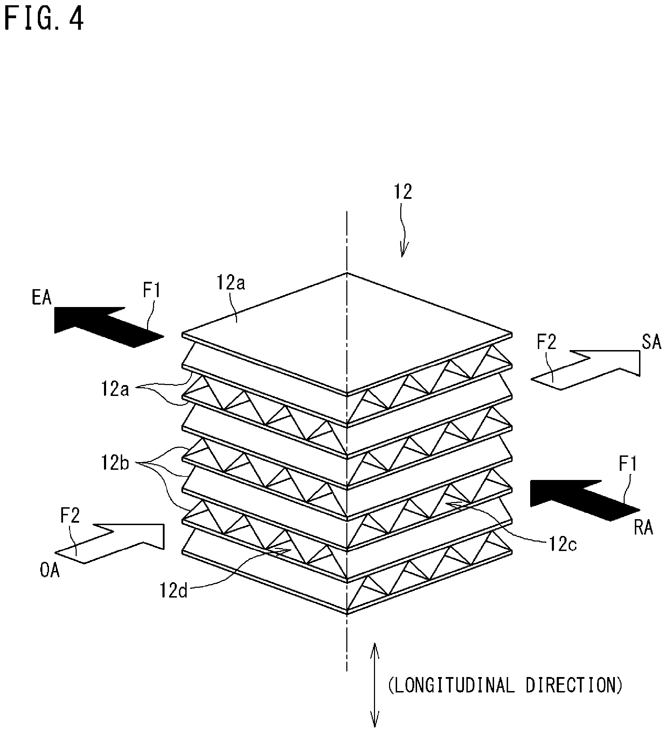

FIG. 4 is a schematic perspective view of the heat exchange element. The ventilator 10 according to the present embodiment includes the heat exchange element 12 shown in FIG. 4. The heat exchange element 12 is an perpendicular total heat exchanger configured such that the first air flow F1 and the second air flow F2 are substantially orthogonal to each other. The heat exchange element 12 includes partition plates 12a and separation wall plates 12b. The partition plates 12a and the separation wall plates 12b are alternately stacked with an appropriate adhesive. The heat exchange element 12 has a substantially quadrangular prism shape as a whole. In the following description, a stacking direction of partition plates 12a and the separation wall plates 12b is also referred to as a longitudinal direction of the heat exchange element 12.

Each of the partition plates 12a has a heat transfer property and moisture permeability, and has a flat plate shape. Each of the separation wall plates 12b has a corrugated plate shape continuously having substantially triangular sections. Each of the separation wall plates 12b forms an air passage between two of the partition plates 12a adjacent to each other. The separation wall plates 12b are stacked so as to be turned by 90 degrees one by one in the stacking direction (the longitudinal direction in FIG. 4) of the partition plates 12a and the separation wall plates 12b. There are thus provided an exhaust air passage 12c for the first air flow F1 and a supply air passage 12d for the second air flow F2. The exhaust air passage 12c and the supply air passage 12d interpose the single partition plate 12a, and are orthogonal to each other. Air flowing in the exhaust air passage 12c and air flowing in the supply air passage 12d exchange sensible heat and latent heat (total heat exchange) via the partition plate 12a having the heat transfer property and the moisture permeability. The heat exchange element 12 is installed inside the casing 11 (see FIGS. 1 to 3) in such an orientation that the longitudinal direction is parallel to the left-right direction. That is, the first direction X and the left-right direction represent the longitudinal direction of the heat exchange element 12.

As shown in FIGS. 1 to 3, the inside of the casing 11 is sectioned by the heat exchange element 12 into two regions, specifically, a region adjacent to the indoor space and a region adjacent to the outdoor space. As shown in FIGS. 1 and 2, the casing 11 is provided therein with an upstream exhaust air passage 16a disposed upstream of the heat exchange element 12 on the first air flow F1, and a downstream exhaust air passage 16b disposed downstream of the heat exchange element 12 on the first air flow F1. The upstream exhaust air passage 16a and the downstream exhaust air passage 16b constitute an exhaust air passage 16 that causes the indoor space and the outdoor space to communicate with each other via the heat exchange element 12.

As shown in FIGS. 1 and 3, the casing 11 is provided therein with an upstream supply air passage 17a disposed upstream of the heat exchange element 12 on the second air flow F2, and a downstream supply air passage 17b disposed downstream of the heat exchange element 12 on the second air flow F2. The upstream supply air passage 17a and the downstream supply air passage 17b constitute the supply air passage 17 that causes the indoor space and the outdoor space to communicate with each other via the heat exchange element 12. In addition to the exhaust air passage 16 and the supply air passage 17 shown in FIGS. 1 to 3, the ventilator 10 of the present disclosure may include a bypass passage that connects the indoor space and the outdoor space without passing through the heat exchange element 12.

As shown in FIGS. 2 and 3, the upstream exhaust air passage 16a and the downstream supply air passage 17b interpose a sectioning wall 18. The downstream exhaust air passage 16b and the upstream supply air passage 17a interpose a sectioning wall 19.

As shown in FIGS. 1 and 2, the downstream exhaust air passage 16b is provided with the exhaust fan 13 near the exhaust air blow-out port 22. The exhaust fan 13, when being driven, generates the first air flow F1, and the return air RA from the indoor space flows through the exhaust air passage 16 and then is discharged to the outdoor space as the exhaust air EA.

As shown in FIGS. 1 and 3, the downstream supply air passage 17b is provided with the supply fan 14 near the supply air blow-out port 24. The supply fan 14, when being operated, generates the second air flow F2, and the outside air OA in the outdoor space flows through the supply air passage 17 and then is supplied to the indoor space as the supply air SA.

### (Water tray)

As shown in FIGS. 1 to 3, the water tray 30 is a dish-shaped member that receives dew condensation water generated in the heat exchange element 12, and is used in a state of being disposed below the heat exchange element 12. The water tray 30 includes a first water receiver 31, a second water receiver 32, and a holder 33.

The ventilator of Patent Literature 1 includes a drain pan for receiving dew condensation water generated in a heat exchange element and discharging the dew condensation water to the outside of the ventilator, and a drain discharge pipe connected to the drain pan. The dew condensation water received by the drain pan flows toward the drain discharge pipe with a natural gradient and is discharged to the outside of the casing. The water tray 30 included in the ventilator 10 of the present disclosure is not connected to a drain discharge pipe for discharging received water, and evaporates and treats the received water. The water tray 30 included in the ventilator 10 of the present disclosure is based on the premise that the generated dew condensation water is treated inside the casing 11, and is different from the drain pan.

As shown in FIGS. 2 and 3, the ventilator 10 of the present embodiment includes a water tray 30 (hereinafter, also referred to as a first water tray 30A) disposed below the heat exchange element 12 and a water tray 30 (hereinafter, also referred to as a second water tray 30B) disposed above the heat exchange element 12. In the ventilator 10 of the present disclosure, one of the first water tray 30A or the second water tray 30B located below the heat exchange element 12 is used as the water tray 30, and receives dew condensation water generated in the heat exchange element 12. When the "water tray 30" is simply referred to in the following description, a configuration common to the first water tray 30A and the second water tray 30B is described. In this manner, since the ventilator 10 includes the water trays 30 below and above the heat exchange element 12, the ventilator can be turned upside down and installed. In the ventilator of the present disclosure, the second water tray disposed above the heat exchange element may be omitted.

As shown in FIGS. 1 to 3, the first water tray 30A is disposed below the heat exchange element 12, and includes the first water receiver 31 disposed on one side in a direction perpendicular to the longitudinal direction and the up-down direction of the heat exchange element 12, the second water receiver 32 disposed on another side in the direction perpendicular to the longitudinal direction and the up-down direction of the heat exchange element 12, and the holder 33 disposed between the first water receiver 31 and the second water receiver 32. As shown in FIGS. 2 and 3, the second water tray 30B is disposed above the heat exchange element 12, and includes the first water receiver 31 disposed on one side in a direction perpendicular to the longitudinal direction and the up-down direction of the heat exchange element 12, the second water receiver 32 disposed on another side in a direction perpendicular to the longitudinal direction and the up-down direction of the heat exchange element 12, and the holder 33 disposed between the first water receiver 31 and the second water receiver 32.

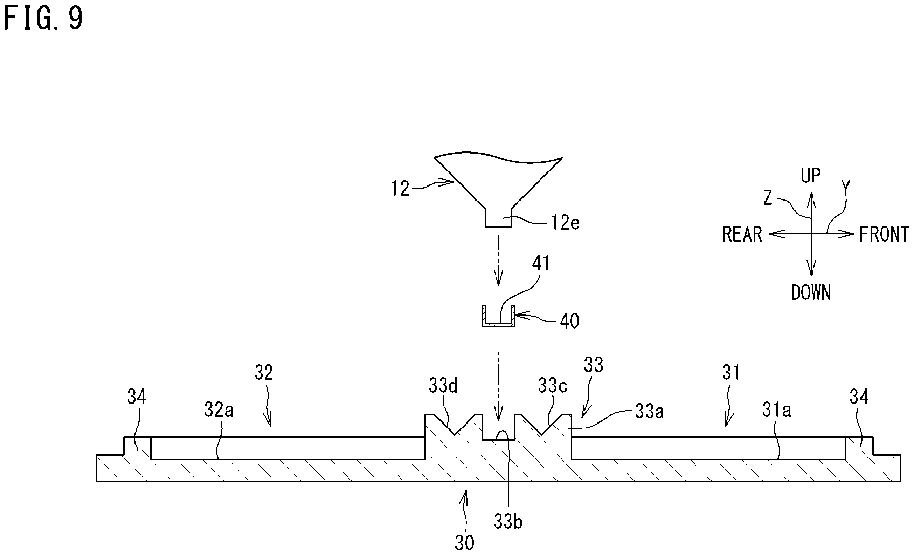

The first water receiver 31 is disposed on one side (front side) in a direction perpendicular to the longitudinal direction (left-right direction) and the up-down direction of the heat exchange element 12. The second water receiver 32 is disposed on another side (rear side) in a direction perpendicular to the longitudinal direction (left-right direction) and the up-down direction of the heat exchange element 12. The holder 33 is disposed between the first water receiver 31 and the second water receiver 32 in a direction perpendicular to the longitudinal direction (left-right direction) and the up-down direction of the heat exchange element 12. The holder 33 is a portion that holds a rail 40 (see FIG. 9) to be described later. The holder 33 is also a portion that holds the heat exchange element 12 via the rail 40.

As shown in FIGS. 1 to 3, the water tray 30 extends to positions outside of ends on one side and another side of the heat exchange element 12 in the longitudinal direction (left-right direction) of the heat exchange element 12 and a direction (front-rear direction) perpendicular to the up-down direction. In the ventilator 10, a height (depth) of the water tray 30 can be suppressed by enlarging a water receiving area of the water tray 30 (an area of a portion that receives water as viewed from above) in this manner, and thus, a dimension of the ventilator 10 in a height direction can be suppressed. The water tray 30 having such a configuration can receive dew condensation water dropping from the heat exchange element 12 without any leakage. The second direction Y and the front-rear direction represent directions perpendicular to the longitudinal direction and the up-down direction of the heat exchange element 12.

In a case where the ventilator 10 of the present disclosure includes an exhaust-side or supply-side bypass passage that connects the indoor space and the outdoor space without passing through the heat exchange element 12, in addition to the exhaust air passage 16 and the supply air passage 17, the exhaust-side bypass passage is provided outside the exhaust air passage 16 in the left-right direction, and the supply-side bypass passage is provided outside the supply air passage 17. In this case, it is preferable to expand a lower side of the exhaust air passage 16 or the supply air passage 17 in the left-right direction and expand the water tray 30 in the left-right direction by recessing a lower side of the exhaust-side bypass passage toward the outside of the exhaust air passage 16 in the left-right direction or recessing the lower side of the supply-side bypass passage toward the outside of the supply air passage 17 in the left-right direction. In this case, the water receiving area of the water tray 30 can be further expanded.

### (Detailed configuration of water tray)

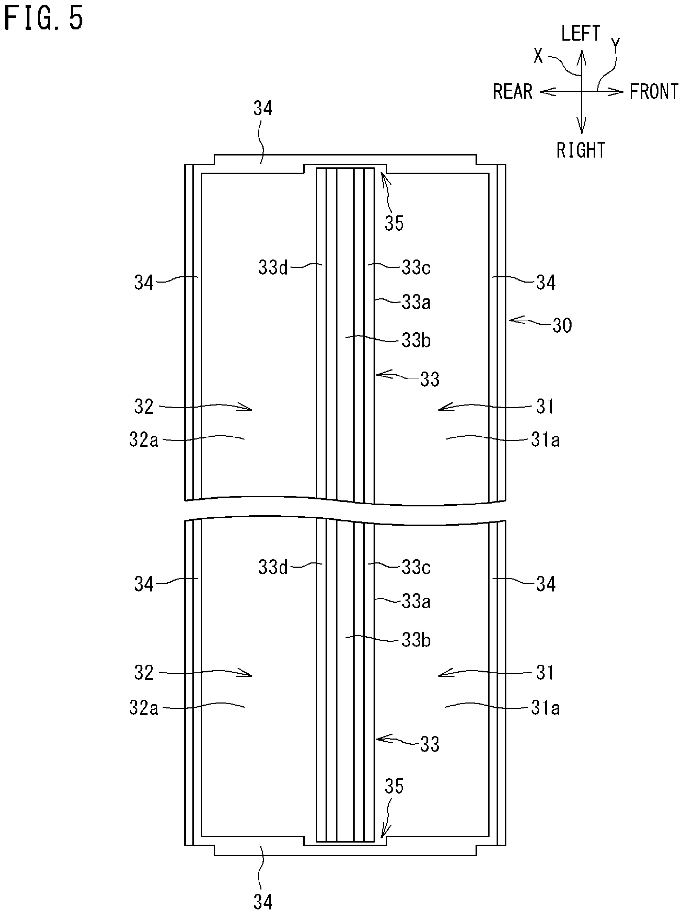

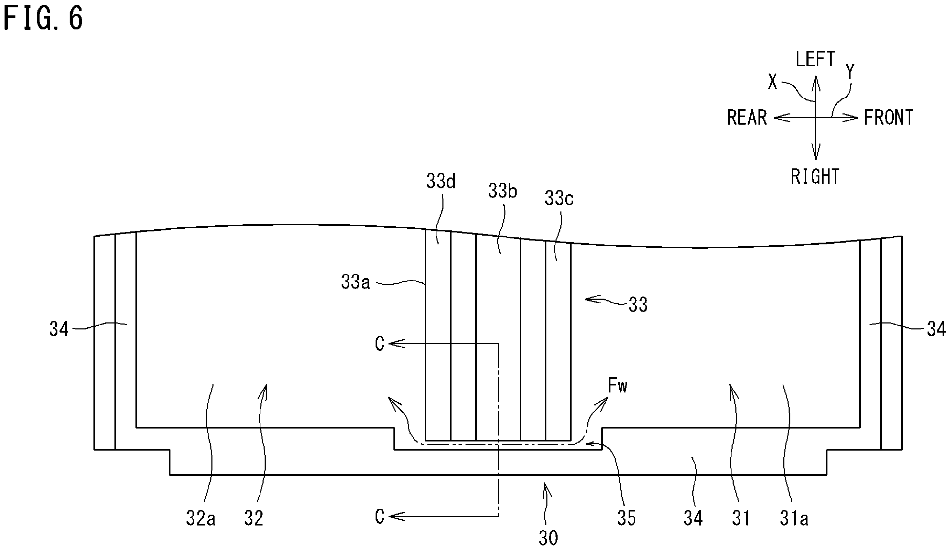

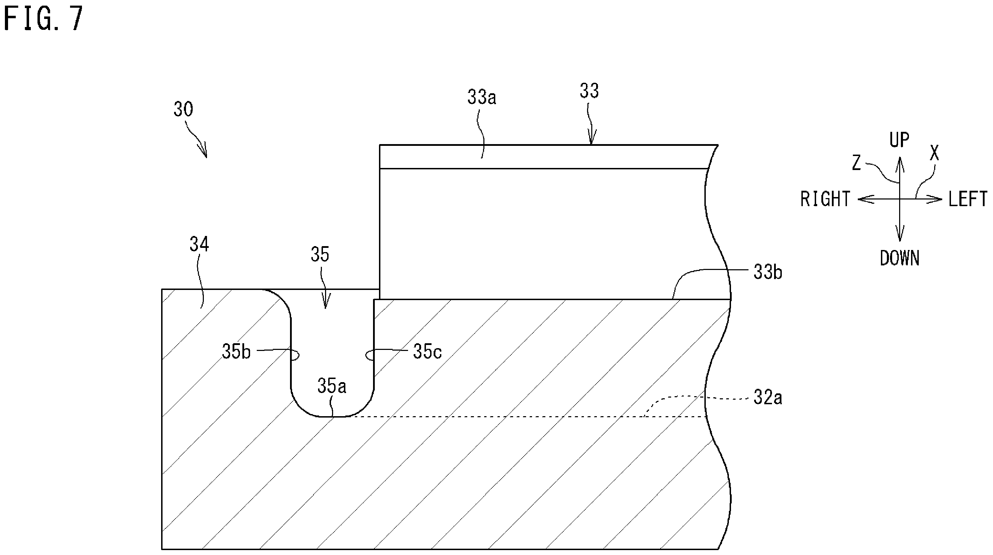

FIG. 5 is a schematic diagram of the water tray as viewed from above. FIG. 6 is an enlarged schematic diagram illustrating one end of the water tray in the longitudinal direction. FIG. 7 is a schematic explanatory sectional view of the water tray taken along line C-C in FIG. 6. Here, the configuration of the water tray 30 will be described more in detail. As shown in FIG. 5, the water tray 30 has a substantially rectangular shape as viewed from the up-down direction. The water tray 30 has a rising portion 34 at an outer peripheral edge. The water tray 30 can accumulate water inside a range surrounded by the rising portion 34. In the water tray 30, the range surrounded by the rising portion 34 is divided into two ranges in the front-rear direction by the holder 33. One of the two ranges on the front side is the first water receiver 31, and another one of the two ranges on the rear side is the second water receiver 32. The water tray 30 can accumulate water in the first water receiver 31 and the second water receiver 32. The first water receiver 31 has a bottom surface 31a, and the second water receiver 32 has a bottom surface 32a.

The ventilator 10 is installed for use in such an orientation that the bottom surface 31a of the first water receiver 31 and the bottom surface 32a of the second water receiver 32 are substantially horizontal. Therefore, in the ventilator 10, the water accumulated in the first water receiver 31 and the second water receiver 32 diffuses to the entire range of each of the bottom surfaces 31a and 32a without being biased to any one of the bottom surface 31a or 32a. The term "substantially horizontal" as used herein means not necessarily completely horizontal. The water tray 30 in the ventilator 10 according to the present embodiment may be installed in an orientation that the bottom surfaces 31a and 32a are slightly inclined with respect to a horizontal direction as long as the water accumulated in the water receivers 31 and 32 is diffused in the entire range of the bottom surfaces 31a and 32a.

As shown in FIGS. 5 to 7, the water tray 30 has a passage 35. The passage 35 allows the first water receiver 31 and the second water receiver 32 to communicate with each other. In the water tray 30, the passage 35 enables forward and backward flows (water flow Fw shown in FIG. 6) between the water accumulated in the first water receiver 31 and the water accumulated in the second water receiver 32. As shown in FIG. 7, the passage 35 is a groove surrounded on three sides by a bottom surface 35a and a pair of side surfaces 35b and 35c facing each other in the left-right direction. In the ventilator 10 of the present disclosure, the bottom surface 35a of the passage 35 and the bottom surfaces 31a and 32a are formed at the same position (height) in the up-down direction. Note that the position of the bottom surface 35a in the up-down direction is preferably the same as or lower than the position of each of the bottom surfaces 31a and 32a in the up-down direction.

As shown in FIG. 5, in the ventilator 10 of the present disclosure, the water tray 30 includes two (a plurality of) passages 35 in total at one end and another end of holder 33 in the longitudinal direction (left-right direction) of the heat exchange element 12. In the ventilator 10 of the present disclosure, the plurality of passages 35 provided in the water tray 30 facilitates forward and backward flows of the dew condensation water between first water receiver 31 and second water receiver 32. In the ventilator 10 of the present disclosure, each of the bottom surfaces 31a and 32a of the water tray 30 are substantially horizontal. The ventilator 10 having such a configuration can accumulate dew condensation water entirely in the water tray 30 without a bias to a part of the first water receiver 31 and a part of the second water receiver 32. Therefore, in the ventilator 10, the dew condensation water received by the water tray 30 can be spread all over the first water receiver 31 and the second water receiver 32. In this case, the dew condensation water on the water tray 30 is easily evaporated, and the dew condensation water is less likely to overflow from the water tray 30 without increasing the height (depth) of the water tray 30. Therefore, in the ventilator 10 of the present disclosure, the height (depth) of the water tray 30 can be suppressed, and the dimension in the height direction of the ventilator 10 can be suppressed.

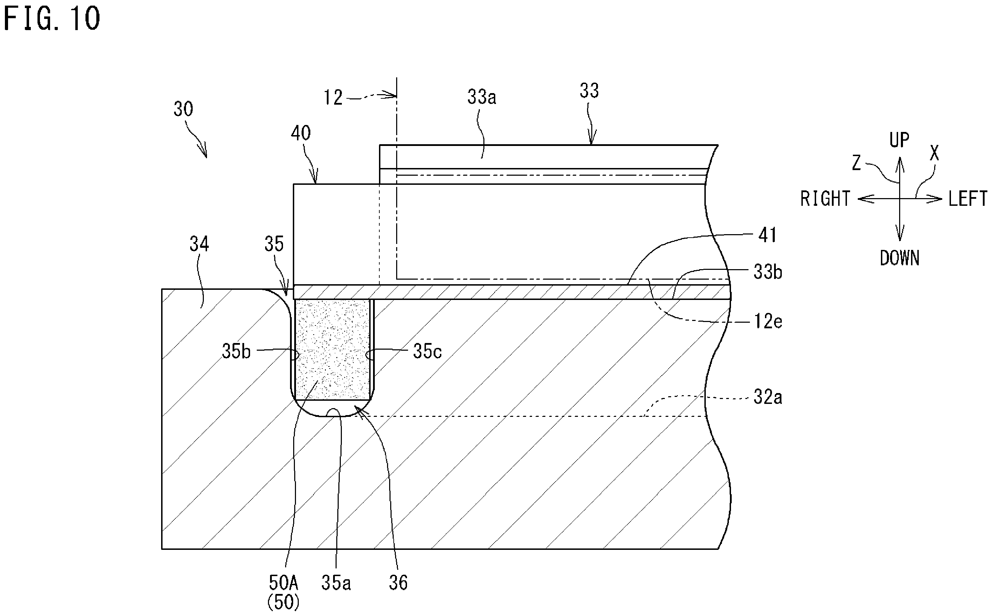

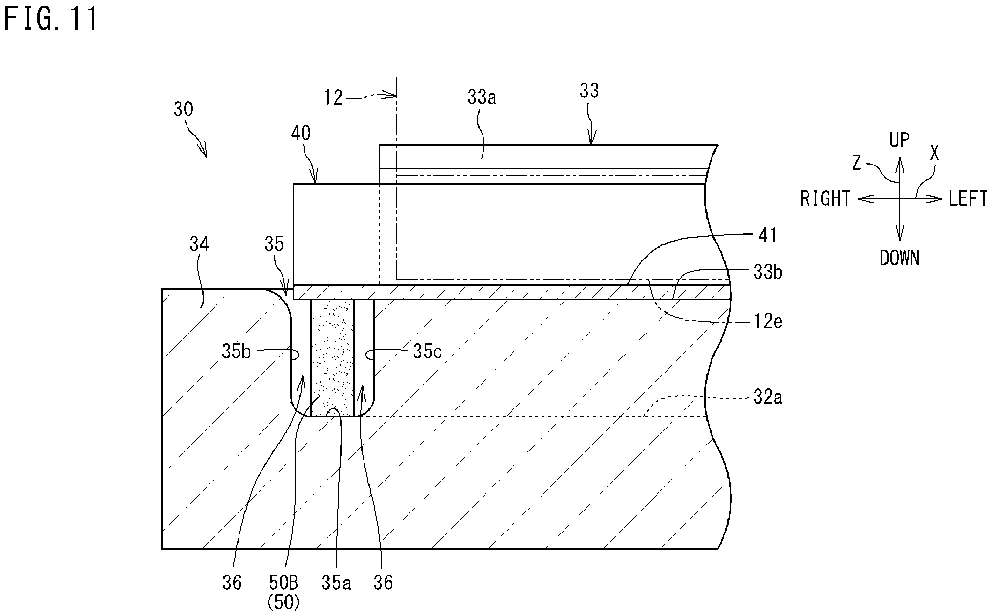

In the case of the first water tray 30A, the passage 35 further enables air to flow between the upstream exhaust air passage 16a through which the outside air OA shown in FIGS. 1 to 3 flows and the upstream supply air passage 17a through which the return air RA flows. In the case of the second water tray 30B, the passage 35 further enables air to flow between the downstream exhaust air passage 16b through which the exhaust air EA flows and the downstream supply air passage 17b through which the supply air SA flows. In the ventilator 10, contamination of the outside air OA and the return air RA or the exhaust air EA and the supply air SA is preferably suppressed. Therefore, in the ventilator 10, a seal material 50 (see FIGS. 10 and 11) to be described later is installed in the passage 35 shown in FIGS. 5 to 7. In the ventilator 10, the seal material 50 hinders the flow of air in the passage 35.

As shown in FIGS. 5 to 7, the holder 33 is a portion where a part of the range surrounded by the rising portion 34 of the water tray 30 is raised in the up-down direction from the bottom surfaces 31a and 32a. The holder 33 is provided along the longitudinal direction (left-right direction) of the heat exchange element 12 between the first water receiver 31 and the second water receiver 32. One end and another end of the holder 33 in the left-right direction are separated from the rising portion 34. The passage 35 is formed between one end and another end of the holder 33 in the left-right direction and the rising portion 34.

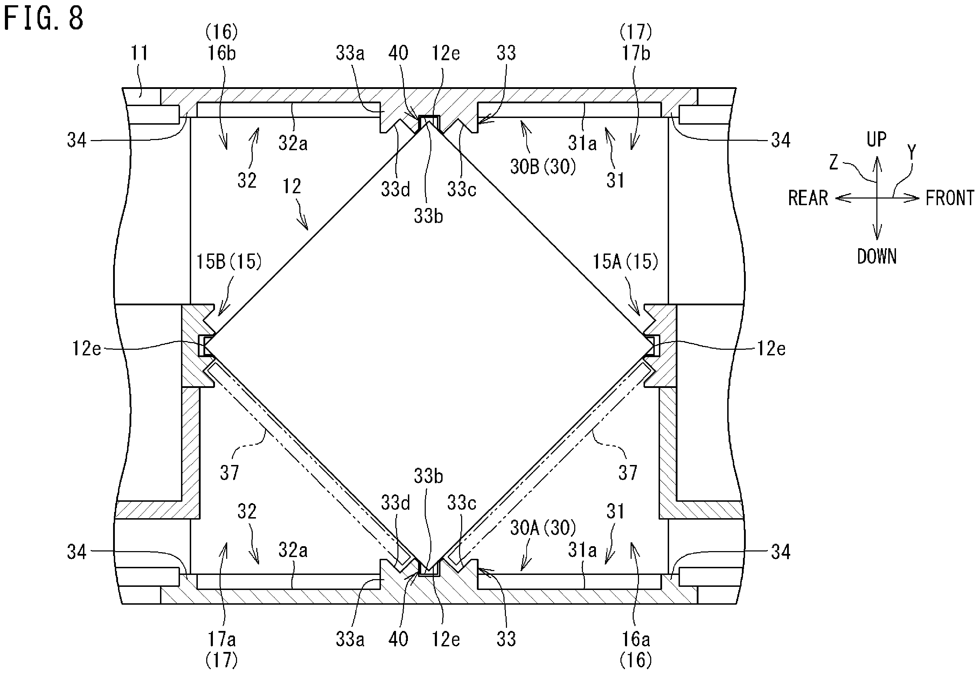

The holder 33 includes a ridge 33a, a rail groove 33b, and filter grooves 33c and 33d. The rail groove 33b is a groove for fitting a rail 40 (see FIG. 9) to be described later, and is formed along the longitudinal direction (left-right direction) of the heat exchange element 12 at a center of the ridge 33a in the front-rear direction. The filter grooves 33c and 33d are grooves for holding a filter (see a filter 37 shown in FIG. 8) that filters air flowing into the heat exchange element 12. In the ventilator 10 according to the present embodiment, the filter grooves 33c and 33d are provided in a part of the holder 33, but the filter grooves 33c and 33d are not required to be a part of the holder 33. In the ventilator 10 according to the present embodiment, the filter grooves 33c and 33d and the filter 37 (see FIG. 8) may be omitted.

In the water tray 30 shown in FIG. 5, the two (plurality of) passages 35 in total are provided at one end and another end of the holder 33 in the longitudinal direction (left-right direction) of the heat exchange element 12. However, the number of passages in the ventilator of the present disclosure is not limited to two, and may be one or three or more. In the water tray 30 shown in FIG. 5, the passage 35 is provided at an end (between one end and another end and the rising portion) of the holder 33 in the longitudinal direction (left-right direction) of the heat exchange element 12. However, in the ventilator of the present disclosure, the passage may be provided at an intermediate position of the holder in the longitudinal direction (left-right direction) of the heat exchange element.

### (Installation state of heat exchange element, rail, and water tray)

FIG. 8 is a partially enlarged sectional view illustrating an installation state of the heat exchange element and the water tray in the ventilator. FIG. 9 is a schematic explanatory sectional view illustrating an installation state of the rail and the heat exchange element in the holder of the water tray. As shown in FIG. 8, the heat exchange element 12 has a square shape as viewed from the longitudinal direction, and has rectangular protrusions 12e protruding outward in a diagonal direction from respective vertexes (four locations in total) of the square. The protrusion 12e is provided over an entire length in the longitudinal direction of the heat exchange element 12.

In the heat exchange element 12, of the four protrusions 12e, the protrusion 12e positioned below is held by the holder 33 of the first water tray 30A, and the protrusion 12e positioned above is held by the holder 33 of the second water tray 30B.

As illustrated in FIG. 8, the ventilator 10 further includes holders 15 for holding the heat exchange element 12 on the front side and the rear side of a space in which the heat exchange element 12 is disposed in the casing 11. In the following description, the holder 15 located on the front side of the holder 15 is referred to as a front holder 15A, and the holder 15 located on the rear side is referred to as a rear holder 15B. In the heat exchange element 12, of the four protrusions 12e, the protrusion 12e located on the front side is held by the front holder 15A, and the protrusion 12e located on the rear side is held by the rear holder 15B.

As shown in FIG. 9, the rail 40 is provided between the rail groove 33b of the holder 33 and the protrusion 12e of the heat exchange element 12. The rail 40 is a steel member having a substantially U-shaped cross section perpendicular to a length direction. The rail 40 has a groove 41 into which the protrusion 12e of the heat exchange element 12 can be inserted. The rail 40 is fitted into the rail groove 33b and provided along the longitudinal direction of the heat exchange element 12. The length of the rail 40 in the longitudinal direction is longer than the length of the holder 33 in the longitudinal direction, and covers a part of an upper portion of the passage 35 in the left-right direction (see FIG. 10). One end and another end of the rail 40 in the left-right direction are located on the passage 35. In a case where the passage 35 is provided at an intermediate position of the holder 33 in the longitudinal direction of the heat exchange element 12, the rail 40 covers the entire upper portion of the passage 35. The rail 40 serves to guide the heat exchange element 12 in the longitudinal direction when the heat exchange element 12 is taken into and out of the casing 11 along the longitudinal direction. The rail 40 also has a role of preventing the heat exchange element 12 and the holder 33 from being in direct contact with each other, and avoids damage and wear of the holder 33. For convenience of description, the rail 40 is not shown in the ventilator 10 in FIGS. 1 to 4.

### (Seal material)

FIG. 10 is an explanatory sectional view illustrating an arrangement situation of a seal material and a formation situation of a water passage according to a first embodiment. FIG. 11 is an explanatory sectional view illustrating an arrangement situation of a seal material and a formation situation of a water passage according to a second embodiment. As shown in FIG. 10, the ventilator 10 includes the seal material 50 disposed in the passage 35 of the water tray 30. The seal material 50 is disposed in a space surrounded by the bottom surface 35a and the side surfaces 35b and 35c of the passage 35 and the rail 40.

In the case illustrated in FIG. 10, a water passage 36 is formed between the bottom surface 35a of the passage 35 and the seal material 50. The water passage 36 is a part of the passage 35. In the mode illustrated in FIG. 10, no gap is provided between each of the side surfaces 35b and 35c and the seal material 50. The seal material 50 seals a portion other than the water passage 36 in the passage 35 to hinder the flow of air in the passage 35, and allows forward and backward flows of water between the first water receiver 31 and the second water receiver 32 via the water passage 36. For example, the seal material 50 may be fixed to the rail 40 by adhesion, or may be pushed into the passage 35 without being fixed to another member.

In the ventilator 10 of the present disclosure, the seal material 50 may be disposed in the passage 35 in a mode illustrated in FIG. 11. In the mode illustrated in FIG. 11, the water passages 36 are formed between the side surface 35b of the passage 35 and the seal material 50 and between the side surface 35c and the seal material 50. In the mode illustrated in FIG. 11, no gap is provided between the bottom surface 35a and the seal material 50. Although the seal material 50 shown in FIGS. 10 and 11 has a substantially rectangular shape as viewed from the front-rear direction, the shape of the seal material 50 disposed in the passage 35 is not limited to this shape, and the shapes of the passage 35 and the water passage 36 may be changed by changing the shape of the seal material 50. By adjusting the shape of the seal material 50 for the passage 35, a balance between the flow of air in the passage 35 and the flow of water in the water passage 36 can be adjusted.

The seal material 50 shown in FIGS. 10 and 11 includes an elastic material. The seal material 50 is formed by molding the material into a shape capable of sealing a part of the passage 35. As a material constituting the seal material 50, for example, urethane foam, polyethylene foam, EPDM foam, or the like can be adopted. The seal material 50 may include, for example, a sponge-like material having open cells. In this case, the forward and backward flows of water between the first water receiver 31 and the second water receiver 32 are allowed through open cells formed inside the seal material 50, and the flow of air between the first water receiver 31 and the second water receiver 32 is hindered by the open cells in which water is accumulated. Note that the seal material 50 may include, for example, a sponge-like material having closed cells or a material having no cells.

In the ventilator 10 of the present disclosure, the seal material 50 may be disposed without a gap between the bottom surface 35a and the side surfaces 35b and 35c of the passage 35. In this case, the seal material 50 preferably includes a material having open cells, and the open cells in the seal material 50 preferably serves as the water passage 36. In the ventilator 10 of the present disclosure, the seal material 50 may be disposed with a gap between the bottom surface 35a and the side surfaces 35b and 35c of the passage 35. In this case, the seal material 50 is preferably fixed to the rail 40.

In the ventilator 10 having such a configuration, the seal material 50 disposed in the passage 35 suppresses the flow of air between the water receivers 31 and 32 through the passage 35. Thus, the amount of air flowing through the passage 35 can be suppressed. Also, the structure and material of the seal material 50 are devised such that the water passage 36 is formed between the bottom surface 35a or the side surfaces 35b and 35c of the passage 35 and the seal material 50, and thus, the flow of air in the passage 35 can be suppressed, and water can flow between the first water receiver 31 and the second water receiver 32. Note that, in the longitudinal direction of the heat exchange element 12, the casing 11 and both ends of the heat exchange element 12 in the longitudinal direction are sealed such that air does not flow between the exhaust air passage 16 and the supply air passage 17 in a portion other than the passage 35.

### (Arrangement of water tray at end of rail)

As shown in FIGS. 10 and 11, in the ventilator 10 of the present disclosure, the water tray 30 extends to positions outside of ends on one side and another side of the rail 40 in the longitudinal direction (left-right direction) of the heat exchange element 12. In the ventilator 10 having such a configuration, dew condensation water dropping from the ends of the rail 40 can be received by the water tray 30 without any leakage.

### (Arrangement of passage at end of rail)

As shown in FIGS. 10 and 11, in the ventilator 10 of the present disclosure, the passage 35 is provided at the end of the holder 33 in the longitudinal direction (left-right direction) of the heat exchange element 12, and the end of the rail 40 is located on the passage 35. In the ventilator 10 having such a configuration, dew condensation water dropping from the end of the rail 40 can be received by the passage 35. In the ventilator 10 of the present disclosure, since the first water receiver 31 and the second water receiver 32 are substantially horizontal, dew condensation water received in the passage 35 can flow substantially evenly to both sides of the first water receiver 31 and second water receiver 32. Therefore, in the ventilator 10 of the present disclosure, it is possible to suppress an imbalance in the amount of dew condensation water accumulated in the first water receiver 31 and the second water receiver 32, and as a result, the dew condensation water can be diffused to and received by all over the first water receiver 31 and the second water receiver 32.

### [Functional effects of embodiments]

(1) The ventilator 10 according to the above embodiment includes the casing 11 having the exhaust air passage 16 and the supply air passage 17, the exhaust fan 13 that is installed in the exhaust air passage 16 and generates the exhaust flow in the exhaust air passage 16, the air supply fan 14 that is installed in the supply air passage 17 and generates the supply air flow in the supply air passage 17, the heat exchange element 12 that performs heat exchange between air flowing through the exhaust air passage 16 and air flowing through the supply air passage 17, the rail 40 that is disposed below the heat exchange element 12 and guides the heat exchange element 12 when the heat exchange element 12 is taken into and out of the casing 11 along the longitudinal direction, a water tray 30 that is disposed below the heat exchange element 12 and includes the first water receiver 31 disposed on one side in a direction perpendicular to the longitudinal direction and an up-down direction of the heat exchange element 12, the second water receiver 32 disposed on another side in the direction perpendicular to the longitudinal direction and the up-down direction of the heat exchange element 12, the holder 33 that is disposed between the first water receiver 31 and the second water receiver 32 and holds the rail 40, and the passage 35 that is formed in the holder 33 and allows the first water receiver 31 and the second water receiver 32 to communicate with each other, and the seal material 50 that is disposed in the passage 35 and hinders the flow of air between the first water receiver 31 and the second water receiver 32 via the passage 35, in which the water passage 36 through which water flows between the first water receiver 31 and the second water receiver 32 is formed between the bottom surface 35a or the side surfaces 35b and 35c of the passage 35 and the seal material 50.
   In the ventilator 10 having the above configuration, the seal material 50 disposed in the passage 35 can suppress the flow of air between the water receivers 31 and 32 through the passage 35. As a result, the amount of air flowing through the passage 35 can be suppressed. Furthermore, the structure and the material of the seal material 50 are devised such that the water passage 36 is formed between the bottom surface 35a or the side surfaces 35b and 35c of the passage 35 and the seal material 50, and thus, the flow of air in the passage 35 can be suppressed, and water can flow between the first water receiver 31 and the second water receiver 32. The ventilator 10 as described above can easily suppress the amount of air flowing through the passage 35 between the first water receiver 31 disposed on one side of the heat exchange element 12 and the second water receiver 32 disposed on another side of the heat exchange element 12 in the second direction Y (front-rear direction) perpendicular to the longitudinal direction and the up-down direction of the heat exchange element 12 in the first water tray 30A provided below the heat exchange element 12.
(2) In the ventilator 10 according to the above embodiment, the bottom surface 31a of the first water receiver 31 and the bottom surface 32a of the second water receiver 32 are substantially horizontal. Two passages 35 are provided in the longitudinal direction of the heat exchange element 12, and the seal material 50 is disposed in each of the passages 35. The water passage 36 through which water flows between the first water receiver 31 and the second water receiver 32 is formed between the bottom surface 35a or the side surfaces 35b and 35c of each passage 35 and the seal material 50.
   The ventilator 10 having the above configuration can accumulate dew condensation water all over the first water receiver 31 and the second water receiver 32 in the water tray 30. A plurality of passages 35 provided in such a configuration facilitates forward and backward flows of dew condensation water between the first water receiver 31 and the second water receiver 32. Therefore, in the ventilator 10 according to the above embodiment, the dew condensation water can be spread all over the first water receiver 31 and the second water receiver 32 in the water tray 30. In this case, the dew condensation water on the water tray 30 is easily evaporated, the height (depth) of the water tray 30 can be suppressed, and the dimension in the height direction of the ventilator 10 can be suppressed.
(3) In the ventilator 10 according to the above embodiment, the water tray 30 extends to a position outside of ends on one side and another side of the heat exchange element 12 in the longitudinal direction of the heat exchange element 12 and in the front-rear direction perpendicular to the longitudinal direction and the up-down direction of the heat exchange element 12.
   In the ventilator 10 having the above configuration, by enlarging the water receiving area of the water tray 30, the height (depth) of the water tray 30 can be suppressed, and the dimension in the height direction of the ventilator 10 can be suppressed. In this case, the water tray 30 can receive dew condensation water dropping from the heat exchange element 12 without any leakage.
(4) In the ventilator 10 according to the above embodiment, the water tray 30 extends to a position outside of ends on one side and another side in the longitudinal direction of the rail 40.
   In the ventilator 10 having the above configuration, dew condensation water dropping from the ends of the rail 40 can be received by the water tray 30 without any leakage.
(5) In the ventilator 10 according to the above embodiment, the passage 35 is provided at the end of the holder 33 in the longitudinal direction of the heat exchange element 12, and the end of the rail 40 is located on the passage 35.
   In the ventilator 10 having the above configuration, the dew condensation water dropping from the ends of the rail 40 can be received by the passage 35. In the ventilator 10 having such a configuration, the dew condensation water received in the passage 35 can flow to both sides of the first water receiver 31 and the second water receiver 32, and an imbalance of the dew condensation water accumulated in the first water receiver 31 and the second water receiver 32 can be suppressed.
(6) In the ventilator 10 according to the above embodiment, the water tray 30 (first water tray 30A) is further disposed above heat exchange element 12 as the second water tray 30B having a vertically symmetrical mode.

The ventilator 10 having the above configuration can be turned upside down for use, for example, when there is a restriction on an installation location.

The embodiments have been described above. Various changes to modes and details will be available without departing from the gist and the scope of the claims.

### REFERENCE SIGNS LIST

- 10: ventilator
- 11: casing
- 12: heat exchange element
- 13: exhaust fan
- 14: supply fan
- 16: exhaust air passage
- 17: supply air passage
- 30: water tray
- 30A: first water tray
- 30B: second water tray
- 31: first water receiver
- 31a: bottom surface
- 32: second water receiver
- 32a: bottom surface
- 33: holder
- 35: passage
- 35a: bottom surface
- 35b: side surface
- 35c: side surface
- 36: water passage
- 40: rail
- 50: seal material

## Claims

1. A ventilator (10) comprising:
a casing (11) having an exhaust air passage (16) and a supply air passage (17);
an exhaust fan (13) that is installed in the exhaust air passage (16) and generates an exhaust flow in the exhaust air passage (16);
an air supply fan (14) that is installed in the supply air passage (17) and generates a supply air flow in the air supply air passage (17);
a heat exchange element (12) that allows heat exchange between air flowing through the exhaust air passage (16) and air flowing through the supply air passage (17);
a rail (40) that is disposed below the heat exchange element (12) and guides the heat exchange element (12) when the heat exchange element (12) is taken into and out of the casing (11) along a longitudinal direction;
a water tray (30) that is disposed below the heat exchange element (12) and includes a first water receiver (31) disposed on one side in a direction perpendicular to the longitudinal direction and an up-down direction of the heat exchange element (12), a second water receiver (32) disposed on another side in the direction perpendicular to the longitudinal direction and the up-down direction of the heat exchange element (12), a holder (33) that is disposed between the first water receiver (31) and the second water receiver (32) and holds the rail (40), and a passage (35) that is formed in the holder (33) and allows the first water receiver (31) and the second water receiver (32) to communicate with each other ; and
a seal material (50) that is disposed in the passage (35) and hinders a flow of air between the first water receiver (31) and the second water receiver (32) via the passage (35), wherein
a water passage (36) through which water flows between the first water receiver (31) and the second water receiver (32) is formed between a bottom surface (35a) or a side surface (35b, 35c) of the passage (35) and the seal material (50).

2. The ventilator (10) according to claim 1, wherein
a bottom surface (31a) of the first water receiver (31) and a bottom surface (32a) of the second water receiver (32) are substantially horizontal, and
two or more of the passages (35) are provided in the longitudinal direction of the heat exchange element (12), the seal material (50) is disposed in each of the passages (35), and the water passage (36) through which water flows between the first water receiver (31) and the second water receiver (32) is formed between the bottom surface (35a) or the side surface (35b, 35c) of each of the passages (35) and the seal material (50).

3. The ventilator (10) according to claim 1 or 2, wherein the water tray (30) extends to a position outside of ends on one side and another side of the heat exchange element (12) in the longitudinal direction of the heat exchange element (12) and in a direction perpendicular to the longitudinal direction and the up-down direction of the heat exchange element (12).

4. The ventilator (10) according to claim 1 or 2, wherein the water tray (30) extends to a position outside of ends on one side and another side in a longitudinal direction of the rail (40).

5. The ventilator (10) according to claim 1 or claim 2, wherein
the passage (35) is provided at an end of the holder (33) in the longitudinal direction of the heat exchange element (12), and
an end in the longitudinal direction of the rail (40) is located on the passage (35).

6. The ventilator (10) according to claim 1 or 2, wherein the water tray (30) is further disposed above the heat exchange element (12) as a vertically symmetrical mode.
